# EUROPEAN PATENT APPLICATION

(11) **EP 4 142 039 A1**
(43) Date of publication of application: **01.03.2023**
(21) Application number: 20932441.7
(22) Date of filing: 01.12.2020
(51) Int. Cl.: H01M 50/543, H01M 50/572, H01M 50/147, H01M 50/183, H01M 10/04

(54) **SECONDARY BATTERY**

(30) Priority: 21.04.2020 KR 20200048221
(71) Applicant: Samsung SDI Co., Ltd., Yongin-si, Gyeonggi-do 17084 (KR)
(72) Inventor: LEE, Jong-Ha, Yongin-si, Gyeonggi-do 17084 (KR); CHUN, Byoungmin, Yongin-si, Gyeonggi-do 17084 (KR)
(74) Representative: Gulde & Partner
(86) International application number: PCT/KR2020/017371
(87) International publication number: WO 2021/215612

(57) **Abstract**

A rechargeable battery includes: an electrode assembly including a first electrode and a second electrode spaced from the first electrode; a case connected to the first electrode to receive the electrode assembly, and including an opening for exposing the electrode assembly; a cap plate combined to the case to cover a peripheral region of the opening, and including a through-hole for exposing a center region of the opening; a terminal plate disposed between the cap plate and the electrode assembly to cover the center region of the opening, and connected to the second electrode; and a sealing portion disposed between the cap plate and the terminal plate, and bonding between the cap plate and the terminal plate, wherein the terminal plate includes a flange portion overlapping the cap plate, and a terminal portion protruding from the flange portion corresponding to the through-hole, a height of an end being different from a height of a surface of the cap plate.

## Description

### [Technical Field]

The present disclosure relates to a rechargeable battery.

### [Background Art]

In general, a rechargeable battery may be repeatedly charged and discharged.

Recently, as demands on wearable devices such as headphones, earphones, smartwatches, and medical devices attachable to bodies using radio communication such as Bluetooth are recently increasing, needs on very small rechargeable batteries mounted on the wearable devices are increasing.

The very small rechargeable batteries may be mounted on the wearable device, and may have high structural stability against external impacts applied to the rechargeable batteries when the wearable device is used and is overturned or falls.

### [Disclosure]

The present invention has been made in an effort to provide a rechargeable battery having high structural stability against external impacts by preventing generation of a short circuit between a cathode and an anode when the external impacts are generated.

An embodiment of the present invention provides a rechargeable battery including: an electrode assembly including a first electrode and a second electrode spaced from the first electrode; a case connected to the first electrode to receive the electrode assembly, and including an opening for exposing the electrode assembly; a cap plate combined to the case to cover a peripheral region of the opening, and including a through-hole for exposing a center region of the opening; a terminal plate disposed between the cap plate and the electrode assembly to cover the center region of the opening, and connected to the second electrode; and a sealing portion disposed between the cap plate and the terminal plate, and bonding between the cap plate and the terminal plate, wherein the terminal plate includes a flange portion overlapping the cap plate, and a terminal portion protruding from the flange portion corresponding to the through-hole, a height of an end being different from a height of a surface of the cap plate.

The flange portion may have a greater area than the terminal portion.

The flange portion may contact the sealing portion, and the terminal portion may not contact the sealing portion.

The flange portion may be parallel to the cap plate.

A height of an end of the terminal portion from the electrode assembly may be lower than a height of a surface of the cap plate from the electrode assembly.

A height of an end of the terminal portion from the electrode assembly may be higher than a height of a surface of the cap plate from the electrode assembly.

The terminal portion may be integrally formed with the flange portion.

A thickness of the terminal portion may be greater than a thickness of the flange portion.

The terminal plate may include forged aluminum.

A thickness of the terminal portion may correspond to a thickness of the flange portion.

The terminal plate may include drawn stainless steel.

A first end of the electrode assembly may face the case, and a second end of the electrode assembly may face the flange portion.

The electrode assembly may further include: a separator disposed between the first electrode and the second electrode; a first electrode tab for connecting between the first electrode and the case, and contacting the case; and a second electrode tab for connecting between the second electrode and the terminal plate, and contacting the flange portion.

The flange portion may be disposed between the second electrode tab and the sealing portion.

The sealing portion may insulate between the cap plate and the terminal plate.

According to the embodiment, the rechargeable battery having high structural stability against external impacts by preventing generation of a short circuit between a cathode and an anode when the external impacts are generated.

### [Description of the Drawings]

FIG. 1 shows a perspective view of a rechargeable battery according to an embodiment.
FIG. 2 shows a cross-sectional view with respect to a line II-II of FIG. 1.
FIG. 3 shows an enlarged cross-sectional view of a portion A of FIG. 2.
FIG. 4 shows a cross-sectional view of a rechargeable battery according to another embodiment.
FIG. 5 shows a cross-sectional view of a rechargeable battery according to the other embodiment.

### [Mode for Invention]

The present invention will be described more fully hereinafter with reference to the accompanying drawings, in which embodiments of the invention are shown. As those skilled in the art would realize, the described embodiments may be modified in various different ways, all without departing from the scope of the present invention.

Unless explicitly described to the contrary, the word "comprise" and variations such as "comprises" or "comprising" will be understood to imply the inclusion of stated elements but not the exclusion of any other elements.

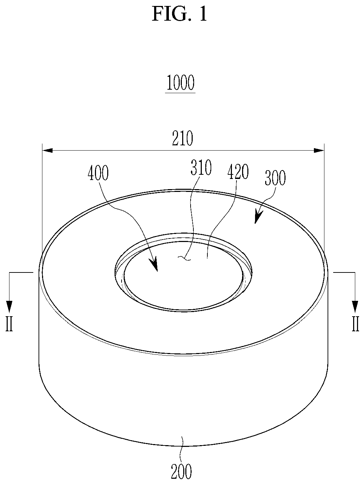

A rechargeable battery according to an embodiment will now be described with reference to FIG. 1 to FIG. 3.

The rechargeable battery according to an embodiment is a very small rechargeable battery, it may be a coin cell or a button cell, and without being limited thereto, it may be a cylindrical cell or a pin cell.

The coin cell or the button cell is a battery in a thin coin shape or a button shape, and it represents the battery of which a ratio (H/D) of a height (H) vs. a battery diameter (D) is equal to or less than 1, but it is not limited thereto.

The coin cell or the button cell may have a circular cross-section in a horizontal direction, and without being limited thereto, the cross-section in the horizontal direction may be an oval or a polygon.

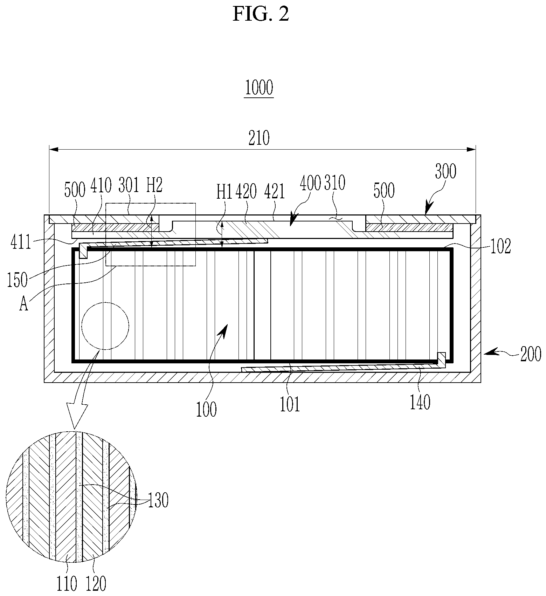

FIG. 1 shows a perspective view of a rechargeable battery according to an embodiment. FIG. 2 shows a cross-sectional view with respect to a line II-II of FIG. 1.

Referring to FIG. 1 and FIG. 2, the rechargeable battery 1000 includes an electrode assembly 100, a case 200, a cap plate 300, a terminal plate 400, and a sealing portion 500.

The electrode assembly 100 is received into the case 200. A first end 101 that is a bottom portion of the electrode assembly 100 faces a lower portion of the case 200, and a second end 102 that is a top portion of the electrode assembly 100 faces a flange portion 410 of the terminal plate 400 for covering an opening 210 of the case 200. The first end 101 and the second end 102 of the electrode assembly 100 may have planar shapes in parallel to each other, and are not limited thereto.

The electrode assembly 100 includes a first electrode 110, a second electrode 120, a separator 130, a first electrode tab 140, and a second electrode tab 150.

The first electrode 110 and the second electrode 120 are spaced from each other and the separator 130 including an insulating material is positioned between the first electrode 110 and the second electrode 120. The first electrode 110 may be an anode, and the second electrode 120 may be a cathode, and without being limited thereto, the first electrode 110 may be a cathode, and the second electrode 120 may be an anode.

The first electrode 110 has a band form extending in one direction, and includes a negative coated region representing a region in which a negative active material layer is applied to a current collector of a metal film (e.g., a foil of Cu) and a negative uncoated region representing a region in which no active material is applied. The negative uncoated region may be positioned on one end in an extending direction of the first electrode 110.

The second electrode 120 has a band form spaced from the first electrode 110 with the separator 130 therebetween and extending in one direction, and includes a positive electrode coated region indicating a region in which a positive active material layer is applied to a current collector of a metal film (e.g., a foil of Al) and a positive electrode uncoated region indicating a region in which no positive active material layer is applied. The positive electrode uncoated region may be positioned on one end in an extending direction of the second electrode 120.

The separator 130 extends in one direction between the first electrode 110 and the second electrode 120 and prevents short-circuits between the first electrode 110 and the second electrode 120.

The first electrode 110, the separator 130, and the second electrode 120 are sequentially stacked to be wound in a jelly roll shape, and without being limited thereto, they may have various shapes. The first electrode 110, the second electrode 120, and the separator 130 may include various types of materials known to a person skilled in the art.

The first electrode tab 140 extends to the case 200 from the first electrode 110 positioned on the first end 101 of the electrode assembly 100. The first electrode tab 140 connects between the first electrode 110 and the case 200. The first electrode tab 140 contacts the first electrode 110 and the case 200. The case 200 has a same polarity (e.g., anode) as the first electrode 110 by the first electrode tab 140.

The second electrode tab 150 extends to the case 200 from the second electrode 120 positioned on the second end 102 of the electrode assembly 100. The second electrode tab 150 connects between the second electrode 120 and the terminal plate 400. The second electrode tab 150 contacts the second electrode 120 and the terminal plate 400. The terminal plate 400 has a same polarity (e.g., a cathode) as the second electrode 120 by the second electrode tab 150.

A center pin penetrating a center of the electrode assembly 100 in a perpendicular direction may be positioned on a center portion of the electrode assembly 100.

The case 200 receives the electrode assembly 100. The case 200 includes an opening 210 for exposing the second end 102 of the electrode assembly 100. A lower portion of the case 200 is connected to the first electrode 110 positioned on the first end 101 of the electrode assembly 100 by the first electrode tab 140 to have the same polarity (e.g., an anode) as the first electrode 110. The case 200 has a cylindrical form for receiving the jelly-roll-type electrode assembly 100, and without being limited thereto, it may have various shapes known to a person skilled in the art.

The case 200 may receive various types of electrolyte solutions known to a person skilled in the art as well as the electrode assembly 100.

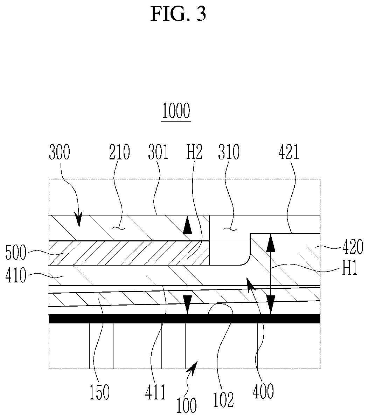

FIG. 3 shows an enlarged cross-sectional view of a portion A of FIG. 2.

Referring to FIG. 1 to FIG. 3, the cap plate 300 is combined to the case 200 to cover a peripheral region of the opening 210. The cap plate 300 includes a through-hole 310 for exposing a center region of the opening 210. The cap plate 300 is combined to a side wall of the case 200 forming the opening 210 of the case 200 by a welding process to cover the peripheral region of the opening 210. The cap plate 300 has a ring shape by the through-hole 310 formed in the center, and is not limited thereto. The cap plate 300 is combined to the case 200 to have the same polarity (e.g., an anode) as the first electrode 110.

The terminal plate 400 is positioned between the cap plate 300 and the electrode assembly 100. The terminal plate 400 is positioned in a receiving space formed by the cap plate 300 and the case 200. The terminal plate 400 covers the center region of the opening 210 of the case 200 exposed by the through-hole 310 of the cap plate 300. As the terminal plate 400 covers the center region of the opening 210 and the cap plate 300 covers the peripheral region of the opening 210, the opening 210 of the case 200 is completely covered by the terminal plate 400 and the cap plate 300. The terminal plate 400 is connected to the second electrode tab 150 positioned on the second end 102 of the electrode assembly 100 and is connected to the second electrode 120 of the electrode assembly 100. The terminal plate 400 has the same polarity (e.g., a cathode) as the second electrode 120.

The terminal plate 400 includes a flange portion 410 and a terminal portion 420.

The flange portion 410 is positioned between the cap plate 300 and the electrode assembly 100 and overlaps the cap plate 300. The flange portion 410 has a greater area than the terminal portion 420. For example, regarding the terminal plate 400, a diameter of the flange portion 410 may be greater than a diameter of the terminal portion 420. A top portion of the flange portion 410 contacts the sealing portion 500, and a bottom portion of the flange portion 410 contacts the second electrode tab 150. A lower surface 411 of the flange portion 410 is a plane in parallel to an upper surface 301 of the cap plate 300, and is not limited thereto. The flange portion 410 is positioned between the second electrode tab 150 and the sealing portion 500, and is bonded to the cap plate 300 by the sealing portion 500.

The flange portion 410 that is the cathode overlapping the cap plate 300 that is the anode has a greater area than the terminal portion 420, is positioned between the second electrode tab 150 of the electrode assembly 100 and the cap plate 300, and is bonded to the cap plate 300 by the sealing portion 500, so when external impacts are generated, separation of the terminal plate 400 from the cap plate 300 is suppressed, and contacting of the second electrode tab 150 and the cap plate 300 is blocked by the flange portion 410, so generation of a short circuit between the second electrode tab 150 that is a cathode and the cap plate 300 that is an anode is prevented. The second electrode tab 150 may contact the terminal portion 420 and may contact the flange portion 410, so a degree of a contact position of freedom of the second electrode tab 150 for the terminal plate 400 may increase. For example, when the second electrode tab 150 is welded to be connected to the terminal plate 400, the welding process may become easy.

The terminal portion 420 protrudes from the flange portion 410 corresponding to the through-hole 310 of the cap plate 300 and is inserted into the through-hole 310. The terminal portion 420 is exposed to the outside by the through-hole 310. The terminal portion 420 does not overlap the cap plate 300, and has a smaller area than the flange portion 410. The terminal portion 420 does not contact the sealing portion 500. An end surface 421 positioned on an uppermost portion of the terminal portion 420 is positioned in the through-hole 310. The end surface 421 of the terminal portion 420 may be positioned at a bottom portion of the through-hole 310. A first height (H1) of the end surface 421 of the terminal portion 420 from the second end 102 of the electrode assembly 100 is lower than a second height (H2) of the upper surface 301 of the cap plate 300 from the second end 102 of the electrode assembly 100. The end surface 421 of the terminal portion 420 has a planar shape in parallel to the upper surface 301 of the cap plate 300, and is not limited thereto.

The end surface 421 of the terminal portion 420 that is the cathode not overlapping the cap plate 300 that is the anode is positioned to be lower than the upper surface 301 of the cap plate 300, so when it is overturned and falls on a conductive foreign material or when the conductive foreign material contacts the cap plate 300, generation of a short circuit between the terminal portion 420 and the cap plate 300 is prevented.

The terminal portion 420 is integrally formed with the flange portion 410, and a thickness of the terminal portion 420 is greater than a thickness of the flange portion 410. The terminal plate 400 may include forged aluminum, and is not limited thereto.

The sealing portion 500 is positioned between the cap plate 300 and the terminal plate 400, and bonds between the cap plate 300 and the terminal plate 400. The sealing portion 500 includes an insulating material, and insulates between the cap plate 300 and the terminal plate 400. The sealing portion 500 may be thermally fused by using heat or laser beams between the cap plate 300 and the flange portion 410 of the terminal plate 400, or may be inserted between the cap plate 300 and the flange portion 410 of the terminal plate 400, and is not limited thereto. The sealing portion 500 may include various types of known materials for bonding and insulating between the cap plate 300 and the terminal plate 400. As the sealing portion 500 bonds between the cap plate 300 and the terminal plate 400, the opening 210 of the case 200 is completely sealed by the cap plate 300, the terminal plate 400, and the sealing portion 500.

As described, as the terminal plate 400 that is a cathode is connected to the second electrode tab 150 that is the cathode of the electrode assembly 100 between the cap plate 300 that is an anode and the electrode assembly 100, and the sealing portion 500 bonds between the cap plate 300 and the terminal plate 400, the rechargeable battery 1000 according to an embodiment suppresses separation of the terminal plate 400 from the cap plate 300 by external impacts and blocks contacting of the second electrode tab 150 and the cap plate 300, thereby preventing generation of a short circuit between the terminal plate 400 and the cap plate 300.

In detail, regarding the rechargeable battery 1000, the flange portion 410 overlapping the cap plate 300 has a greater area than the terminal portion 420, is positioned between the second electrode tab 150 of the electrode assembly 100 and the cap plate 300, and is bonded to the cap plate 300 by the sealing portion 500, so when external impacts are generated, the flange portion 410 suppresses separation of the terminal plate 400 from the cap plate 300 and the flange portion 410 blocks contacting between the second electrode tab 150 and the cap plate 300.

The end surface 421 of the terminal portion 420 that is the cathode not overlapping the cap plate 300 that is the anode is positioned to be lower than the upper surface 301 of the cap plate 300, so when it contacts an external conductive foreign material, the rechargeable battery 1000 prevents generation of a short circuit between the terminal portion 420 and the cap plate 300.

That is, the rechargeable battery 1000 having a high structural stability against external impacts by preventing a short circuit from being generated between the cathode and the anode when the rechargeable battery 1000 is overturned or falls and external impacts are generated is provided.

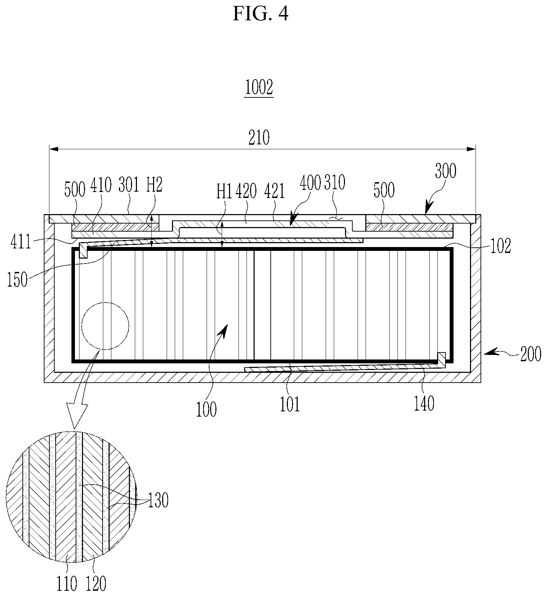

A rechargeable battery according to another embodiment will now be described with reference to FIG. 4.

Parts that are different from the above-described rechargeable battery according to an embodiment will now be described.

FIG. 4 shows a cross-sectional view of a rechargeable battery according to another embodiment.

Referring to FIG. 4, the rechargeable battery 1002 according to another embodiment includes an electrode assembly 100, a case 200, a cap plate 300, a terminal plate 400, and a sealing portion 500.

The terminal plate 400 is positioned between the cap plate 300 and the electrode assembly 100. The terminal plate 400 is positioned in a receiving space formed by the cap plate 300 and the case 200. The terminal plate 400 covers a center region of the opening 210 of the case 200 exposed by the through-hole 310 of the cap plate 300. As the terminal plate 400 covers the center region of the opening 210 and the cap plate 300 covers the peripheral region of the opening 210, the opening 210 of the case 200 is completely covered by the terminal plate 400 and the cap plate 300. The terminal plate 400 is connected to the second electrode tab 150 positioned on the second end 102 of the electrode assembly 100 and is connected to the second electrode 120 of the electrode assembly 100. The terminal plate 400 has the same polarity (e.g., a cathode) as the second electrode 120.

The terminal plate 400 includes a flange portion 410 and a terminal portion 420.

The flange portion 410 is positioned between the cap plate 300 and the electrode assembly 100, and overlaps the cap plate 300. The flange portion 410 has a greater area than the terminal portion 420. The top portion of the flange portion 410 contacts the sealing portion 500, and the bottom portion of the flange portion 410 contacts the second electrode tab 150. The lower surface 411 of the flange portion 410 is a plane in parallel to the upper surface 301 of the cap plate 300, and is not limited thereto. The flange portion 410 is positioned between the second electrode tab 150 and the sealing portion 500, and is bonded to the cap plate 300 by the sealing portion 500.

The terminal portion 420 protrudes from the flange portion 410 corresponding to the through-hole 310 of the cap plate 300 and is inserted into the through-hole 310. The terminal portion 420 is exposed to the outside by the through-hole 310. The terminal portion 420 does not overlap the cap plate 300, and has a smaller area than the flange portion 410. The terminal portion 420 does not contact the sealing portion 500. The end surface 421 positioned on the uppermost portion of the terminal portion 420 is positioned in the through-hole 310. The end surface 421 of the terminal portion 420 may be positioned at a bottom portion of the through-hole 310. The first height (H1) of the end surface 421 of the terminal portion 420 from the second end 102 of the electrode assembly 100 is lower than the second height (H2) of the upper surface 301 of the cap plate 300 from the second end 102 of the electrode assembly 100. The end surface 421 of the terminal portion 420 has a planar shape in parallel to the upper surface 301 of the cap plate 300, and is not limited thereto.

The terminal portion 420 is integrally formed with the flange portion 410, and the thickness of the terminal portion 420 is equivalent to the thickness of the flange portion 410. The terminal plate 400 may include drawn stainless steel, and is not limited thereto.

As described, as the terminal plate 400 that is a cathode is connected to the second electrode 120 that is the cathode of the electrode assembly 100 between the cap plate 300 that is an anode and the electrode assembly 100, and the sealing portion 500 bonds between the cap plate 300 and the terminal plate 400, the rechargeable battery 1002 according to another embodiment suppresses separation of the terminal plate 400 from the cap plate 300 by external impacts and blocks contacting of the second electrode tab 150 and the cap plate 300, thereby preventing generation of a short-circuit between the terminal plate 400 and the cap plate 300.

In detail, regarding the rechargeable battery 1002 according to another embodiment, the flange portion 410 overlapping the cap plate 300 has a greater area than the terminal portion 420, is positioned between the second electrode tab 150 of the electrode assembly 100 and the cap plate 300, and is bonded to the cap plate 300 by the sealing portion 500, so when external impacts are generated, the flange portion 410 suppresses separation of the terminal plate 400 from the cap plate 300 and the flange portion 410 prevents a short circuit between the second electrode tab 150 and the cap plate 300.

The end surface 421 of the terminal portion 420 that is the cathode not overlapping the cap plate 300 that is the anode is positioned to be lower than the upper surface 301 of the cap plate 300, so when external impacts are generated, the rechargeable battery 1002 prevents impacts from being directly applied to the terminal portion 420, and prevents generation of a short circuit between the terminal portion 420 that is a cathode and the cap plate 300 that is an anode.

That is, the rechargeable battery 1002 having a high structural stability against external impacts by preventing a short circuit from being generated between the cathode and the anode when the rechargeable battery 1002 is overturned or falls and external impacts are generated is provided.

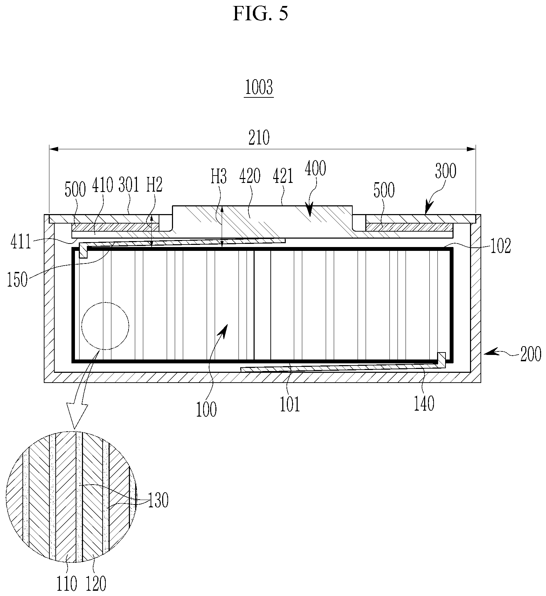

A rechargeable battery according to the other embodiment will now be described with reference to FIG. 5.

Parts that are different from the above-described rechargeable battery according to an embodiment will now be described.

FIG. 5 shows a cross-sectional view of a rechargeable battery according to the other embodiment.

Referring to FIG. 5, the rechargeable battery 1003 includes an electrode assembly 100, a case 200, a cap plate 300, a terminal plate 400, and a sealing portion 500.

The terminal plate 400 is positioned between the cap plate 300 and the electrode assembly 100. The terminal plate 400 is positioned in the receiving space formed by the cap plate 300 and the case 200. The terminal plate 400 covers the center region of the opening 210 of the case 200 exposed by the through-hole 310 of the cap plate 300. As the terminal plate 400 covers the center region of the opening 210 and the cap plate 300 covers the peripheral region of the opening 210, the opening 210 of the case 200 is completely covered by the terminal plate 400 and the cap plate 300. The terminal plate 400 is connected to the second electrode tab 150 positioned on the second end 102 of the electrode assembly 100 and is connected to the second electrode 120 of the electrode assembly 100. The terminal plate 400 has the same polarity (e.g., a cathode) as the second electrode 120.

The terminal plate 400 includes a flange portion 410 and a terminal portion 420.

The flange portion 410 is positioned between the cap plate 300 and the electrode assembly 100, and overlaps the cap plate 300. The flange portion 410 has a greater area than the terminal portion 420. The top portion of the flange portion 410 contacts the sealing portion 500, and the bottom portion of the flange portion 410 contacts the second electrode tab 150. The lower surface 411 of the flange portion 410 is a plane in parallel to the upper surface 301 of the cap plate 300, and is not limited thereto. The flange portion 410 is positioned between the second electrode tab 150 and the sealing portion 500, and is bonded to the cap plate 300 by the sealing portion 500.

The terminal portion 420 protrudes from the flange portion 410 corresponding to the through-hole 310 of the cap plate 300 and penetrates the through-hole 310. The terminal portion 420 is exposed to the outside by the through-hole 310. The terminal portion 420 does not overlap the cap plate 300, and has a smaller area than the flange portion 410. The terminal portion 420 does not contact the sealing portion 500. The end surface 421 positioned on the uppermost portion of the terminal portion 420 is positioned on an upper outside of the through-hole 310. A third height (H3) of the end surface 421 of the terminal portion 420 from the second end 102 of the electrode assembly 100 is higher than the second height (H2) of the upper surface 301 of the cap plate 300 from the second end 102 of the electrode assembly 100. The end surface 421 of the terminal portion 420 has a planar shape in parallel to the upper surface 301 of the cap plate 300, and is not limited thereto.

The terminal portion 420 is integrally formed with the flange portion 410, and the thickness of the terminal portion 420 is greater than the thickness of the flange portion 410. The terminal plate 400 may include forged aluminum, but is not limited thereto, and may include drawn stainless steel so that thicknesses of the terminal portion 420 and the flange portion 410 may be constant.

As described, as the terminal plate 400 that is a cathode is connected to the second electrode tab 150 that is the cathode of the electrode assembly 100 between the cap plate 300 that is an anode and the electrode assembly 100, and the sealing portion 500 bonds between the cap plate 300 and the terminal plate 400, the rechargeable battery 1003 according to the other embodiment prevents separation of the terminal plate 400 from the cap plate 300 by external impacts and blocks contacting of the second electrode tab 150 and the cap plate 300, thereby preventing generation of a short circuit between the terminal plate 400 and the cap plate 300.

In detail, the flange portion 410 overlapping the cap plate 300 has a greater area than the terminal portion 420, is positioned between the second electrode tab 150 of the electrode assembly 100 and the cap plate 300, and is bonded to the cap plate 300 by the sealing portion 500, so when external impacts are generated, the rechargeable battery 1003 suppresses separation of the terminal plate 400 from the cap plate 300 and blocks contacting of the flange portion 410 between the second electrode tab 150 and the cap plate 300.

The end surface 421 of the terminal portion 420 that is the cathode not overlapping the cap plate 300 that is the anode is positioned to be higher than the upper surface 301 of the cap plate 300, so when it contacts the external conductive foreign material, the rechargeable battery 1003 prevents generation of a short circuit between the terminal portion 420 and the cap plate 300. That is, the rechargeable battery 1003 having a high structural stability against external impacts by preventing a short circuit from being generated between the cathode and the anode when the rechargeable battery 1003 is overturned or falls and external impacts are generated is provided.

While this invention has been described in connection with what is presently considered to be practical embodiments, it is to be understood that the invention is not limited to the disclosed embodiments, but, on the contrary, is intended to cover various modifications and equivalent arrangements included within the scope of the appended claims.

### <Description of symbols>

electrode assembly 100, case 200, cap plate 300, terminal plate 400, flange portion 410, terminal portion 420, sealing portion 500

## Claims

1. A rechargeable battery comprising:
an electrode assembly including a first electrode and a second electrode spaced from the first electrode;
a case connected to the first electrode to receive the electrode assembly, and including an opening for exposing the electrode assembly;
a cap plate combined to the case to cover a peripheral region of the opening, and including a through-hole for exposing a center region of the opening;
a terminal plate disposed between the cap plate and the electrode assembly to cover the center region of the opening, and connected to the second electrode; and
a sealing portion disposed between the cap plate and the terminal plate, and bonding between the cap plate and the terminal plate,
wherein the terminal plate includes
a flange portion overlapping the cap plate, and
a terminal portion protruding from the flange portion corresponding to the through-hole, a height of an end being different from a height of a surface of the cap plate.

2. The rechargeable battery of claim 1, wherein
the flange portion has a greater area than the terminal portion.

3. The rechargeable battery of claim 2, wherein
the flange portion contacts the sealing portion, and
the terminal portion does not contact the sealing portion.

4. The rechargeable battery of claim 2, wherein
the flange portion is parallel to the cap plate.

5. The rechargeable battery of claim 2, wherein
a height of an end of the terminal portion from the electrode assembly is lower than a height of a surface of the cap plate from the electrode assembly.

6. The rechargeable battery of claim 2, wherein
a height of an end of the terminal portion from the electrode assembly is higher than a height of a surface of the cap plate from the electrode assembly.

7. The rechargeable battery of claim 1, wherein
the terminal portion is integrally formed with the flange portion.

8. The rechargeable battery of claim 7, wherein
a thickness of the terminal portion is greater than a thickness of the flange portion.

9. The rechargeable battery of claim 8, wherein
the terminal plate includes forged aluminum.

10. The rechargeable battery of claim 7, wherein
a thickness of the terminal portion corresponds to a thickness of the flange portion.

11. The rechargeable battery of claim 10, wherein
the terminal plate includes drawn stainless steel.

12. The rechargeable battery of claim 1, wherein
a first end of the electrode assembly faces the case, and
a second end of the electrode assembly faces the flange portion.

13. The rechargeable battery of claim 12, wherein
the electrode assembly further includes:
a separator disposed between the first electrode and the second electrode;
a first electrode tab for connecting between the first electrode and the case, and contacting the case; and
a second electrode tab for connecting between the second electrode and the terminal plate, and contacting the flange portion.

14. The rechargeable battery of claim 13, wherein
the flange portion is disposed between the second electrode tab and the sealing portion.

15. The rechargeable battery of claim 1, wherein
the sealing portion insulates between the cap plate and the terminal plate.
